Europäisches Patentamt

(19) European Patent Office

Office européen des brevets

(11) Publication number: **0 238 260**
**A2**

# (12) EUROPEAN PATENT APPLICATION

(21) Application number: **87302139.8**

(22) Date of filing: **12.03.87**

(51) Int. Cl.⁴: **G 11 B 15/67**

(30) Priority: **21.03.86 US 842446   21.03.86 US 842450**

(43) Date of publication of application:
**23.09.87 Bulletin 87/39**

(84) Designated Contracting States: **DE FR GB NL**

(71) Applicant: **Laser Magnetic Storage International Company**
**4425 Arrows West Drive**
**Colorado Springs Colorado 80907 (US)**

(72) Inventor: **Smith, Jay**
**3216 Kennedy Road**
**Norristown Pennsylvania 19403 (US)**

(74) Representative: **Miller, Joseph et al**
**J. MILLER & CO. Lincoln House 296-302 High Holborn**
**London WC1V 7JH (GB)**

(54) Transport apparatus for receiving and operating upon a tape cartridge.

㋙ A transport apparatus for receiving and operating upon a tape cartridge (2) including a web of tape (5) disposed on a supply reel (6) and having a free end (11) engaged by a leader block (10), the said transport apparatus comprising a take-up reel (21) for receiving said leader block (10) and a leader block loading means (20) for loading the leader block (10) in the said take-up reel (21) characterised in that the leader block loading means (20) comprises a linkage (36) for engaging a slot (12) of said leader block (10) and for delivering said engaged leader block (10) to the take-up reel (21), the said leader block loading means (20) being operatively associated with said take-up reel (21).

FIG. 1

EP 0 238 260 A2

Bundesdruckerei Berlin

## Description

"TRANSPORT APPARATUS FOR RECEIVING AND OPERATING UPON A TAPE CARTRIDGE"

The present invention relates to an apparatus for receiving and operating upon a tape cartridge and, although the invention is not so restricted, it relates more particularly to the storage of data on magnetic recording tape in cartridge form.

In the course of developing various systems for the storage of data on magnetic recording tape, particularly off-line storage of data in the form of back-up storage, a variety of different formats have been developed. Many of these formats call for the tape to be contained in an appropriate cartridge, both to facilitate handling of the tape while in use, and to protect the tape while in storage.

Recently, IBM Corporation has announced a tape cartridge which is primarily intended for use in its Model 3480 data storage system, for the storage of relatively large quantities of data (of the order of 200 megabytes). Details regarding the construction of this type of tape cartridge (hereinafter referred to as a 3480 tape cartridge) may be had with reference to United States Patent No. 4,452,406. By way of general description, the 3480 tape cartridge is comprised of a single reel containing a quantity of magnetic tape and contained in a rectangular enclosure having dimensions of the order of 4 inches (10.16 cms) in width, 5 inches (12.7 cms) in length, and 1 inch (2.54 cms) in height. The cartridge enclosure includes an aperture in one of its major faces, to receive means for rotating the reel of tape contained within the cartridge, and an aperture in one of its corners, for gaining access to the free end of the web of tape. A so-called "leader block" is connected to the free end of the tape, and is frictionally received within the open corner of the cartridge so that it is capable of being withdrawn from and replaced within the cartridge by appropriate means.

In connection with the 3480 tape cartridge, IBM Corporation has also developed equipment for receiving the tape cartridge and for properly placing the web of tape which it contains in operative association with a magnetic read/write head. Further details regarding such equipment may be had with reference to United States Patents Nos. 4,432,508; 4,399,959; 4,399,936; and 4,335,858, which illustrate various different devices which have been developed by the IBM Corporation to accommodate its 3480 tape cartridge.

Unlike many of the other types of tape cartridges which have been developed for use in the off-line storage of data, the IBM 3480 tape cartridge houses only a single reel of magnetic recording tape. The leader block which is connected to the free end of the web of tape is used to introduce the web of tape to the transport apparatus (and the read/write head). To this end, the transport apparatus must be provided with appropriate means for withdrawing the leader block from its nesting within the 3480 tape cartridge, and for threading the leader block (and the web of tape) through the apparatus and past the read/write head. Of course, means must also be provided for unthreading the web of tape (and the leader block) from the apparatus, and for replacing the leader block within its nesting in the 3480 tape cartridge.

Accordingly, special means must be provided to engage the leader block assembly, and to guide the leader block (and the tape which follows) through the transport apparatus which is to operate upon the web of tape. This requires care in withdrawing the leader block from the tape cartridge, and in guiding the web of tape from the supply reel of the tape cartridge, past the read/write head, and into engagement with the take-up reel which is traditionally provided to cooperate with the supply reel in transporting the web of tape through the apparatus and past the read/write head. This necessitates the development of an appropriate path for threading the leader block through the apparatus, as well as means which have sufficient driving forces to withdraw the leader block from its normally seated position within the tape cartridge, and to replace the leader block within this normally seated position after the tape cartridge has been used.

To meet these needs, as well as other design requirements regarding data density and performance characteristics, those devices described in the above-identified United States patents each make use of a loading mechanism which is essentially separate from the remainder of the apparatus which is used to operate upon the magnetic recording tape. In each case, a track or groove is provided for guiding the leader block through the desired tape path and to the take-up reel, under the influence of a dedicated driving means which is separate from the various components comprising the tape transport. Although several different mechanisms are described, in each case a separate motor and track/groove drive is provided to achieve proper interfacing of the web of tape with the apparatus.

As a result of this and other design considerations, those devices which have been developed to operate upon IBM 3480 tape cartridges have generally been large, cumbersome and expensive. While this can be justified in connection with relatively large, mainframe applications, such design constraints have significantly limited, if not totally precluded, use of the 3480 tape cartridge in connection with relatively low cost, minicomputer or microcomputer applications.

Yet another consideration which has inhibited use of the 3480 tape cartridge in mini/micro-computer applications is one of space. It is generally impractical, and therefore undesirable, to necessitate the purchase of an apparatus for off-line, back-up storage or the like which is significantly larger than the primary equipment which the apparatus is to support. In fact, due to the prevalent use of 5 1/4 inch (13.34 cms) magnetic recording (floppy)discs in connection with such applications, a de facto standard has come about for any form of storage equipment (floppy disc, hard disc, cartridge, etc) which is to replace or relate to such conventional storage means. The recognised "form factor" or "footprint" of a standard 5 1/4 inch (13.34 cms) magnetic recording disc calls for a container or housing having dimensions of the order of 5 3/4 inches (14.61 cms) in width, 8 inches (20.32 cms) in depth and 3 1/4 inches (8.26 cms) in height. Those devices described in the above-identified patents are not adaptable to such applications.

Accordingly, limitations of cost and size have significantly limited the ability to use the IBM 3480 tape cartridge in mini/micro-computer applications.

According, therefore, to the present invention, there is provided a transport apparatus for receiving and operating upon a tape cartridge including a web of tape disposed on a supply reel and having a free end engaged by a leader block, the said transport apparatus comprising a take-up reel for receiving said leader block and a leader block loading means for loading the leader block in the said take-up reel, characterised in that the leader block loading means comprises a linkage for engaging a slot of said leader block and for delivering said engaged leader block to the take-up reel, the said leader block loading means being operatively associated with said take-up reel.

The transport apparatus of the present invention is preferably adapted to receive and operate upon an IBM 3480 tape cartridge, which is sufficiently compact to fit within a standard 5 1/4 inch (13.34 cms) footprint or form factor.

The transport apparatus of the present invention permits engagement of the leader block of the tape cartridge, for the loading and unloading of the magnetic recording tape which it contains, without compromising the performance of the tape cartridge.

The transport apparatus of the present invention may readily be made so as to be simple and reliable in operation, and cost effective even in connection with mini/micro-computer applications.

The present invention preferably makes use of a leader block loading means which is directly associated with the take-up reel of the apparatus rather than a separate mechanism. To this end, the take-up reel of the apparatus may be provided with a linkage which extends from the periphery of the take-up reel, and which has a pin for engaging the leader block of the tape cartridge. The pin of the linkage may be caused to proceed along a specified path, following a camming surface under the influence of an over-centre spring, to achieve effective transfer of the leader block from the tape cartridge, through its specified tape path, to the take-up reel, and vice versa. Consequently, leader block loading and unloading may be accomplished without requiring the use of an additional drive mechanism for this purpose, significantly reducing the number of components of the apparatus, and enabling the apparatus to be reduced to a size which can be fit within a standard 5 1/4 inch (13.34 cms) footprint or form factor.

The leader block loading means may comprise a flange member associated with said take-up reel and having a pivot spaced from the axis of said take-up reel for receiving a first end of said linkage; and a camming means disposed over said take-up reel and including a face for receiving a second end of said linkage.

The second end of the said linkage may be provided with means for engaging the slot of said leader block.

The camming means may lie in a plane which is generally parallel to the plane of said flange member.

In one embodiment of the invention, the said linkage is a single arm extending from the pivot of said flange member. In this embodiment, a spring may be connected between said linkage and said flange member. The spring may be an over-centre spring such that in a first configuration, said linkage is caused to rotate about said pivot in a clockwise direction, and in a second configuration, said linkage is caused to rotate about said pivot in a counter-clockwise direction.

In another embodiment of the invention, the said linkage is an articulating assembly of arms joined at a pivoted connection. In this embodiment, a spring may be connected between the arms of said articulating assembly. The said spring may be an over-centre spring such that in a first configuration, one of said arms is caused to rotate in a clockwise direction with respect to the other of said arms, and in a second configuration, said one arm is caused to rotate in a counter-clockwise direction with respect to said other arm.

The said connection may be a pivoted connection.

The said first and second configurations may be separated by a configuration wherein said pivoted connection is in general alignment with the operative connections of said spring.

The said over-centre spring may develop a force to load the second end of said linkage against the face of said camming means. The said over-centre spring may also develop a force against the second end of said linkage to load the leader block into said take-up reel.

Preferably, an arm of said articulating assembly which is operatively associated with the pivot of said take-up reel includes a stop member projecting from said arm toward said take-up reel. The said stop member may comprise a flange for engaging a stop formed in said take-up reel to limit rotation of said linkage about said pivot.

A reaction point may be provided for directing the forces applied to said leader block when said leader block is to be withdrawn from or replaced in said tape cartridge.

The transport apparatus may be adapted to receive said tape cartridge so that said leader block is remote from said take-up reel. Thus the transport apparatus may be adapted to receive said tape cartridge so that the rear edge of said tape cartridge extends laterally along a side edge of said transport apparatus.

The invention is illustrated, merely by way of example, in the accompanying drawings, in which:-

Figure 1 is a top plan view of a first embodiment of an apparatus according to the present invention for loading and unloading the leader block of a tape cartridge, Figure 1 showing the tape cartridge as it is initially received within the apparatus,

Figure 2 is a cross-sectional view of the apparatus shown in Figure 1,

Figures 3 to 5 are top plan views similar to Figure 1, showing sequential operation of the leader block loading mechanism,

Figures 6 and 7 are top plan views similar to Figure 1, showing operation of the apparatus as the leader block is unloaded,

Figure 8 is a top plan view of a second embodiment of an apparatus according to the present invention for loading and unloading the leader block of a tape cartridge,

Figures 9 to 12 are top plan views similar to Figure 8, showing sequential operation of the said second embodiment,

Figure 13 is a top plan view of a movable mounting plate used to achieve the tape path illustrated in Figure 12, and

Figure 14 is a top plan view similar to Figure 8, showing operation of the apparatus as the leader block is unloaded.

In the several views provided, like reference numerals denote similar structure.

Terms such as "left", "right", "clockwise", "counter-clockwise", "above" and "beneath" as used in the description below, are to be understood to refer to directions as seen in the respective drawings.

Although specific forms of the invention have been selected for illustration in the drawings, and the following description is drawn in specific terms for the purpose of describing these forms of the invention, this description is not intended to limit the scope of the invention which is defined in the appended claims.

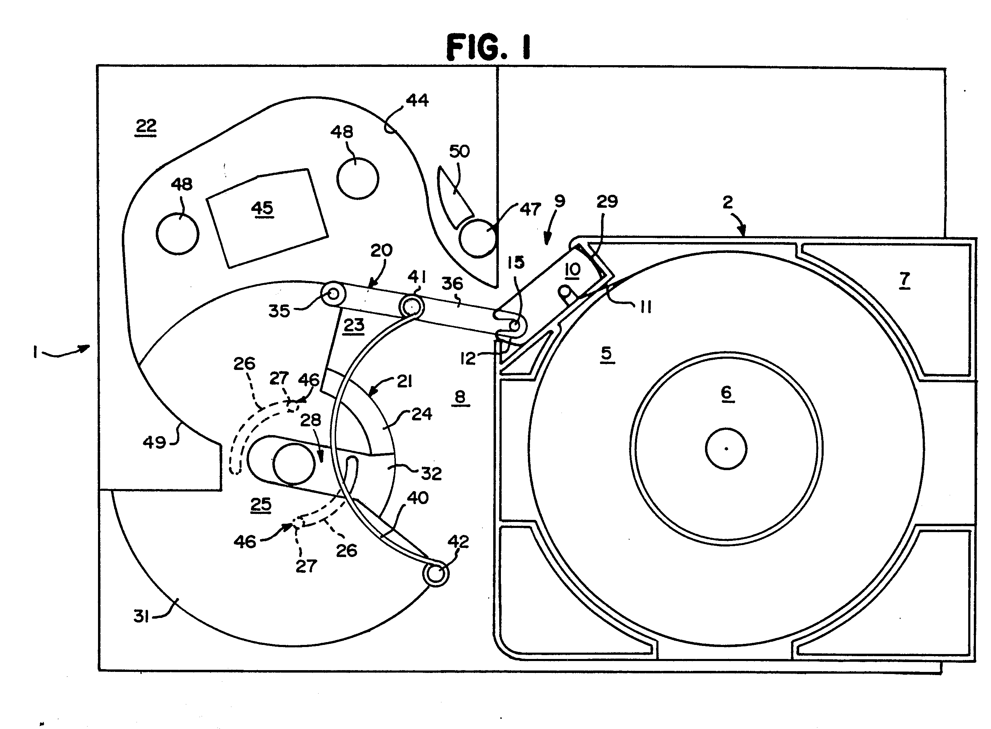

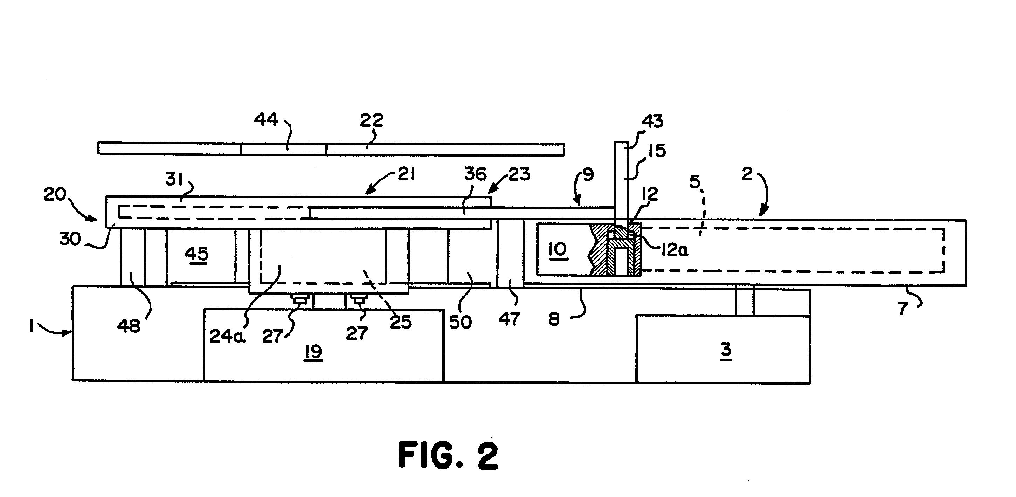

Figures 1 and 2 show a transport apparatus 1 for receiving and operating upon an IBM 3480 tape cartridge 2 in accordance with the present invention. To be noted is that the apparatus 1 is sufficiently compact to be received within the confines of a standard 5 1/4 inch (13.34 cms) form factor or footprint.

The tape cartridge 2 generally comprises a quantity or web of tape 5 wound upon a supply reel 6 and contained within a housing 7. Suitable means (preferably a geared, magnetic coupling) are provided for placing the supply reel 6 in operative association with a supply motor 3 positioned beneath a surface 8 of the transport apparatus 1. A corner 9 of the housing 7 is open, and is adapted to receive a leader block 10, which is used to securely engage a free end 11 of the web of tape 5 in the manner shown.

After being received within the transport apparatus 1, the tape cartridge 2 is then readied for further operation as follows. First, the supply reel 6 is operatively connected to the supply motor 3 which is positioned beneath the surface 8 of the transport apparatus 1, so as to achieve desired rotation of the supply reel 6 in accordance with the selected mode of operation of the transport apparatus 1. Second, a configured pin 15 at one end of an arm 36 is brought into engagement with an engagement slot 12 (and counterbore 12a) which is conventionally provided in the leader block 10 of the tape cartridge 2, so as to operatively connect the leader block 10 with a leader block loading/unloading mechanism 20, and ready the leader block 10 for loading into the transport apparatus 1 as will be described more fully below. Such operative connections may be developed in any of a number of ways, such as by lowering the tape cartridge 2 from a standby position in alignment above the geared, magnetic coupling and configured pin, to an operative position for engaging such components.

The leader block loading/unloading mechanism 20 is generally comprised of three major components including a configured take-up reel 21, a contoured camming surface 22, and an engagement mechanism 23.

The take-up reel 21 is operatively connected to a take-up motor 19 by a concentric hub 24 and coupling 25. The hub 24 is attached to the take-up motor 19, and includes a cylindrical wall 24a which serves to receive the web of tape 5. The coupling 25 is nested within the hub 24, and is operatively connected to the hub 24 by a pair of pegs 27 which depend from the coupling 25 and into a concentrically arranged pair of slots 26 formed in the hub 24.

The coupling 25 is additionally provided with a cavity 28 which is correspondingly configured to the leader block 10 of the tape cartridge 2, and the wall of the hub 24 is provided with a corresponding slot 32 which permits communication with the cavity 28 of the coupling 25 upon proper alignment of the hub 24 and coupling 25 as will become apparent from the description which follows. The cavity 28 is preferably configured to securely receive the leader block 10 so that the rear face 29 of the leader block 10 fills the slot 32 and co-terminates with the periphery of the hub 24, essentially completing the periphery of the hub 24 so as to properly receive the web of tape 5. The upper surface 30 of the coupling 25 is provided with a flange 31 which, as a secondary function serves to retain the web of tape 5 to the take-up reel 21, and as a primary function serves to receive the engagement mechanism 23, at a pivot 35 which is spaced from the axis of the take-up reel 21.

The engagement mechanism 23 is generally comprised of the arm 36 which extends from the pivot 35 at one end thereof to the pin 15 at the other end thereof, the pin 15 being used to engage the slot 12 of the leader block 10. The engagement mechanism 23 also comprises a spring 40 which is connected between an attachment point 41 fixed on the arm 36 and an attachment point 42 fixed on the flange 31. For reasons which will become apparent from the following description, the spring 40 is pivotally connected between the flange 31 and the arm 36 so that the spring 40 is caused to proceed through an "over-centre" position wherein in certain orientations, compression of the spring 40 will cause a clockwise rotation of the arm 36 about the pivot 35, while in other orientations, compression of the spring will cause a counter-clockwise rotation of the arm 36 about the pivot 35. Such rotation is responsive to the position of the pivot 35 with respect to the line of forces developed between the attachment points 41, 42.

The contoured camming surface 22 is positioned above and in a plane substantially parallel to the flange 31 of the take-up reel 21 so that the take-up reel 21 and the engagement mechanism 23 are capable of movement beneath the contoured camming surface 22, but so that the upper end 43 of the pin 15 is capable of following the face 44 of the contoured camming surface 22 to achieve loading and unloading of the leader block 10 as follows.

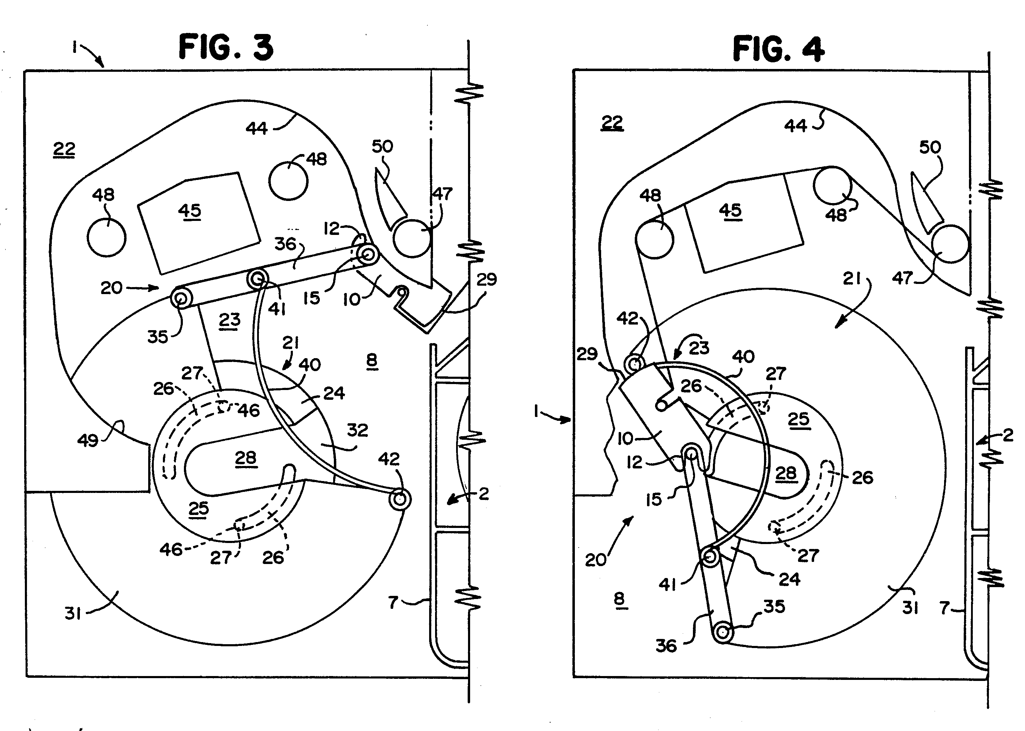

Figures 3-5 show sequential operation of the loading/unloading mechanism 20 to transfer the leader block 10 of the tape cartridge 2 from its seated position within the corner 9 of the housing 7, past a read/write head 45, and to the cavity 28 formed in the take-up reel 21, so that the web of tape 5 is ready for transport between the supply reel 6 and the take-up reel 21 under the influence of the motors 3, 19.

To accomplish this, the take-up reel 21 is caused to undergo a counter-clockwise movement under the influence of the take-up motor 19. In the course of initiating such movement, the slots 26 of the hub 24 are caused to proceed through a defined angle until such time as the pegs 27 engage the ends 46 of the slots 26, directly coupling the motor 19 to the coupling 25. The stored kinetic energy resulting from such movement has been found to be sufficient to cause a retraction of the engagement mechanism 23 which is sufficient to snap the leader block 10 from its nesting within the housing 7. Further detail regarding this "snapping" action may be had with reference to our co-pending patent application Serial No.    ( EP/7020304) invented by Jay Smith and entitled "Apparatus for Coupling a Drive Motor to a Leader Block Loading/Unloading Mechanism", the subject matter of which is incorporated by reference as if fully set forth herein.

Further retraction of the engagement mechanism 23 responsive to continued counter-clockwise rotation of the take-up reel 21 causes the pin 15 (with the leader block 10 attached) to progress to the left as shown in Figure 3, bringing the upper end 43 of the pin 15 into engagement with the face 44 of the contoured camming surface 22. At this point, the spring 40 serves to urge the pin 15 toward the face 44 of the contoured camming surface 22 as the pin 15 progresses along the defined contour.

Further counter-clockwise rotation of the take-up reel 21 serves to guide the leader block 10 through the transport apparatus 1 for delivery to the take-up reel 21. As a result of this motion, the web of tape 5 is caused to progress around an idler roller 47 and past a pair of bearings 48 disposed on opposite sides of the read/write head 45 to develop an appropriate tape wrap at this interface.

With reference to Figure 4, the leader block 10 is eventually drawn inwardly along a segment 49 of the camming surface 22, toward the cavity 28 of the take-up reel 21. Further counter-clockwise rotation of the take-up reel 21 causes the leader block 10 to enter the cavity 28. To enable the leader block 10 to enter the cavity 28, two considerations arise. First, the leader block 10 must arrive in general alignment with the cavity 28 as the take-up reel 21 is rotated.

Such dynamic placement of the leader block 10 is accommodated by the configuration of the engagement mechanism 23. Second, the slot 32 in the hub 24 must be aligned with the cavity 28 in the coupling 25 for the leader block to enter the cavity 28. This is accomplished by properly placing the slot 32 in relation to the slots 26 of the hub 24, so that the slot 32 and the cavity 28 are brought in alignment when the pegs 27 contact the ends 46 of the slots 26 as previously described.

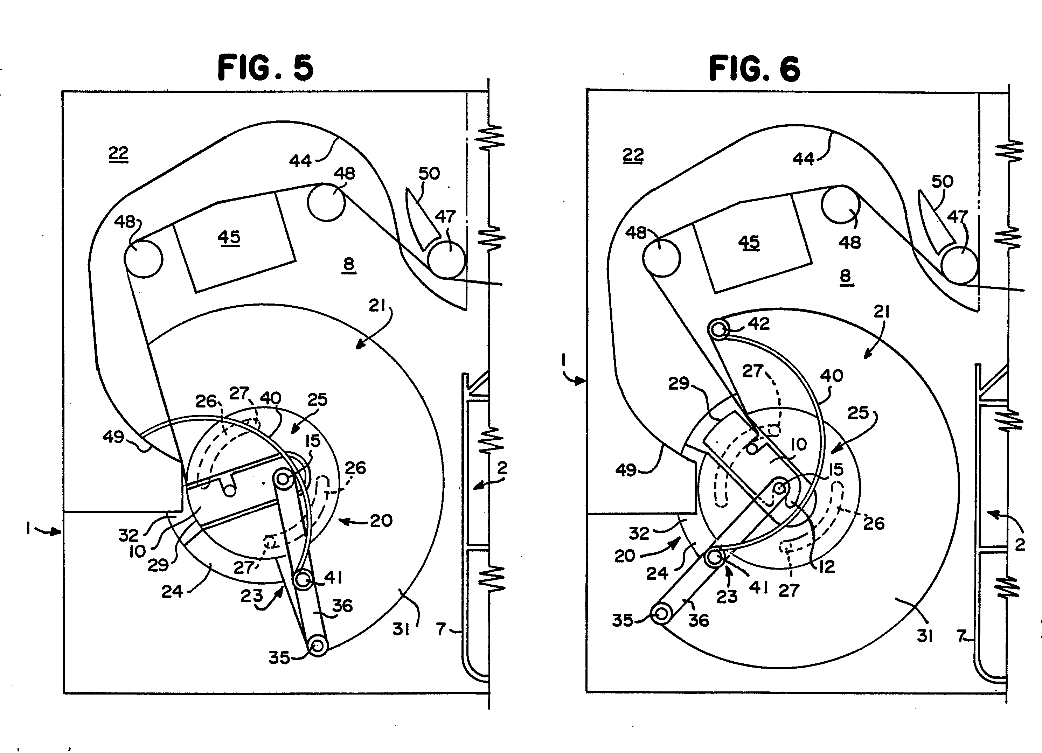

As the leader block 10 enters the cavity 28, the line of forces of the over-centre spring 40 as defined by the attachment points 41, 42, crosses the pivot 35. As a consequence of this, the spring 40 now serves to urge the leader block 10 inwardly toward the centre of the take-up reel 21, assuring that the leader block 10 becomes fully and firmly seated within the cavity 28, as shown in Figure 5. As a result, the periphery of the hub 24 becomes completed by a surface 29 of the leader block 10, permitting the web of tape 5 to be wound around the take-up reel 21 for subsequent transport between the supply reel 6 and the take-up reel 21 in otherwise conventional fashion. It is to be noted that this results in a positive engagement of the web of tape 5 by a hub 24 which is rigidly coupled to the take-up motor 19, so as to assure that the web of tape 5 is properly transported in accordance with generally recognized principles.

Of course, the web of tape 5 must be transported between the supply reel 6 and the take-up reel 21 in a manner which assures that the web of tape 5 is in proper contact with the read/write head 45. In delivering the leader block 10 to the take-up reel 21 as previously described, this is automatically assured by proper placement of the bearings 48 with respect to the read/write head 45.

Having properly threaded the web of tape 5 through the transport apparatus 1, and having placed the web of tape 5 in appropriate contact with the read/write head 45, desired transfers of data may then take place in otherwise conventional manner. This proceeds until such time as the transfer of data has been completed and the tape cartridge 2 is to be unloaded from the transport apparatus 1. In essence, this is accomplished by reversing the above described steps. However, there are certain differences which should be noted in this regard.

The first step necessary is to rotate the supply motor 3 in a clockwise direction until such time as the web of tape 5 is fully unwound from the take-up reel 21. At this point, the forces developed by the spring 40 will still be such as to urge the leader block 10 toward the centre of the take-up reel 21. These forces are overcome by placing an appropriate tension on the web of tape 5 under the influence of the supply motor 3. With reference to Figure 6, this serves to pull the leader block 10 from the cavity 28 of the take-up reel 21, until such time as the line of forces again crosses the pivot 35. As a result, the forces developed by the spring 40 will then be such as to direct the leader block 10 generally outwardly, so as once again to bring the upper end 43 of the pin 15 into contact with the segment 49 of the camming surface 22.

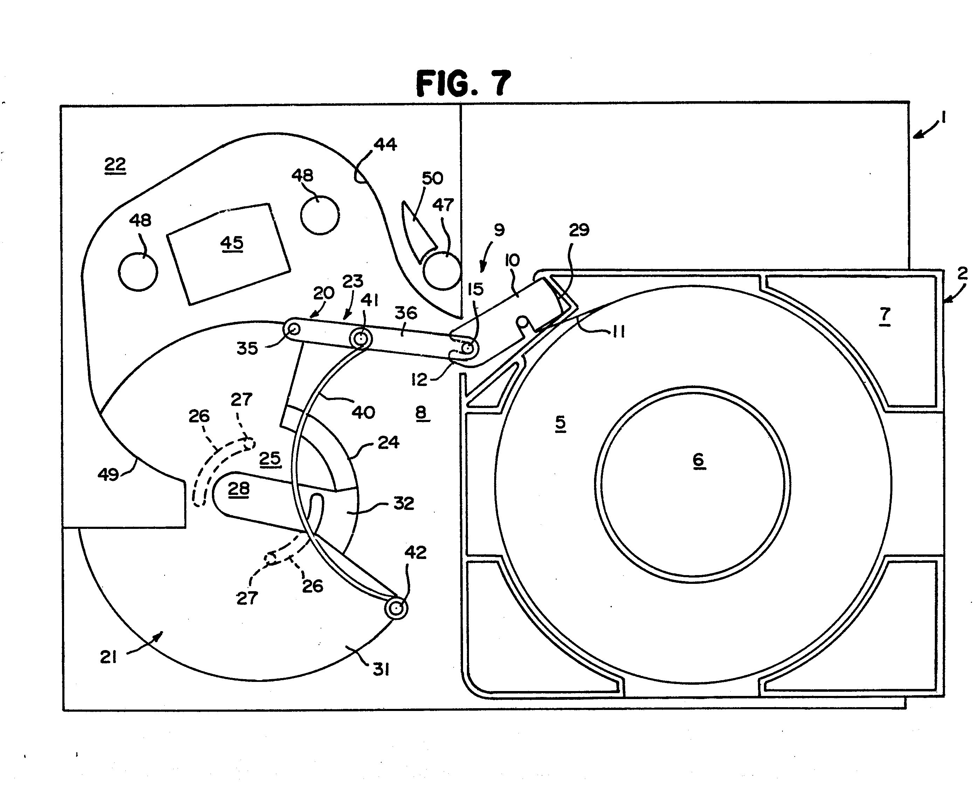

Continued clockwise rotation of the supply motor 3 causes the pin 15, and the leader block 10, to progress along the face 44 of the camming surface 22, until such time as the web of tape 5 and the end 29 of the leader block 10 are returned to the housing 7 of the tape cartridge 2, and the end of the leader block 10 which is engaged by the pin 15 is in a position just outside of its nesting in the corner 9 of the tape cartridge 2, with reference to Figure 7. A guide 50 is preferably provided to assist the leader block 10 in clearing the idler roller 47, just prior to entering the tape cartridge 2.

Further action upon the reels 6, 21 is needed to force the leader block 10 into its nesting in the corner 9 of the tape cartridge 2. The energy required to fully snap the leader block 10 into the housing 7 is again primarily supplied by the hub 24 which connects the take-up reel 21 to the drive motor 19. As previously described in the co-pending Patent Application     (EP/7020304) invented by Jay Smith, entitled "Apparatus for Coupling a Drive Motor to a Leader Block Loading/Unloading Mechanism", the kinetic energy needed to return the leader block 10 to its nesting is again capable of being developed as a result of respective slippage between the slots 26 of the hub 24 and the pegs 27 of the coupling 25. After such steps have been taken to seat the leader block 10 in the housing 7, the take-up reel 21 may be retracted slightly, if desired, to test the seating of the leader block 10 and make sure that it has been fully snapped back into the housing 7.

It will therefore be seen that the foregoing apparatus serves well to satisfy each of the objectives previously set forth. The means used to load and unload the leader block 10 are directly associated with the take-up reel 21, as distinguished from a fully independent threading/unthreading mechanism. The movements necessary for proper operation of the apparatus are developed by properly configuring the flange 31 and the arm 36 of the engagement mechanism 23, in combination with the storage of energy provided as a result of interaction between the hub 24 and coupling 25 of the take-up reel 21. Moreover, these benefits are achieved within the confines of a transport apparatus 1 which is capable of fitting within the standard 5 1/4 inch (13.34 cms) form factor or footprint which is preferred in connection with mini/micro-computer equipment.

It is to be understood that the foregoing apparatus is capable of various modifications. For example, the read/write head 45 and the bearings 48 are capable of being moved to different locations along the surface 8 of the transport apparatus 1, and with respect to one another. Also capable of variation is the contour of the camming surface 22. It is also possible for different engagement mechanisms 23 to be developed by varying the configurations of the arm 36, or by varying the configuration of the take-up reel 21. The spring 40 is also capable of variation, so long as an appropriate over-centre configuration is selected. If desired, the spring 40 can even be replaced with equivalent structures such as a double-sided cam, for example. Additionally, although use of the interactive hub 24 and coupling 25 as previously described is preferred, to reduce the size and current requirements for the take-up motor 19, it is also possible to eliminate such structures in favour of a rigid coupling, if desired, provided an appropriate take-up motor 19 is used.

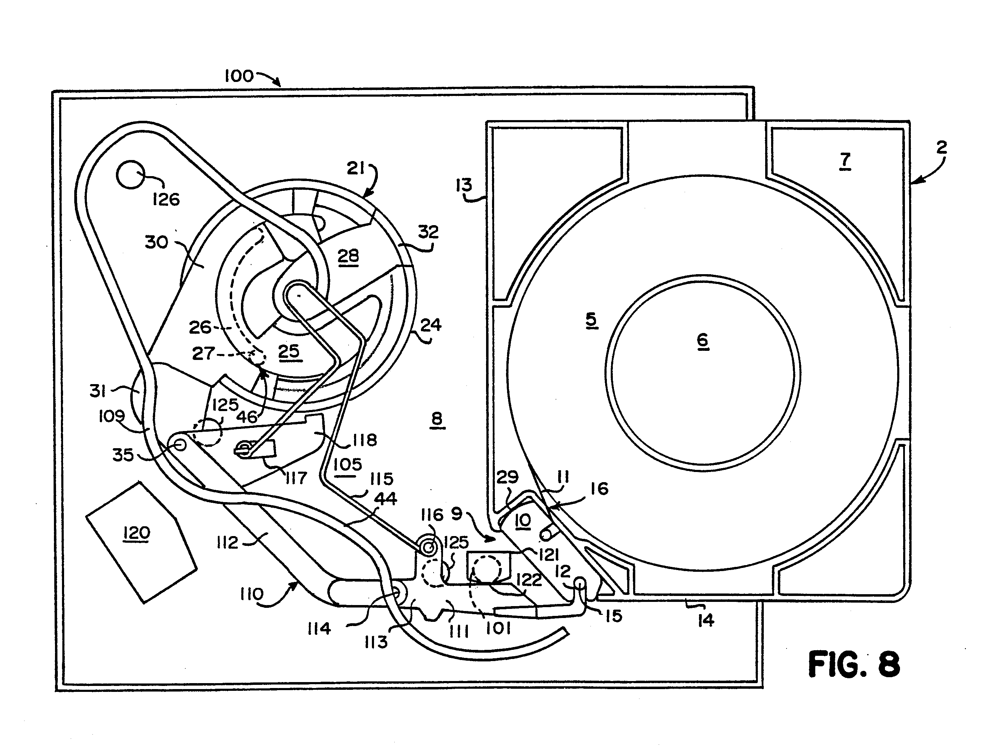

An alternative embodiment transport apparatus 100 which incorporates some of the above-mentioned variations, and which has been found to be particularly beneficial in a variety of ways which will become apparent, is illustrated in Figures 8-14 of the drawings.

As with any magnetic tape recording apparatus, care must be taken to develop a proper tape path between the supply and take-up reels, and across the read/write head, to assure proper registration of the tape with the read/write head. The primary consideration in this regard is one of length, since the tape path must generally be long enough to accommodate distortion of the tape as the web of tape is drawn through the apparatus, such distortion occurring as a result of mechanical irregularities in the apparatus. It is for this very reason that those devices described in the above-mentioned U.S. patents each provide a tape path of significant length, to take account of such potential irregularities.

Also to be considered is that it is often desirable to avoid contact between the oxide coating provided on the web of magnetic recording tape, and components of the apparatus other than the read/write head, such as bearings and idler rollers, in order to extend the useful life of the magnetic recording tape. When the IBM 3480 tape cartridge is used as intended in the various devices described in the above-mentioned U.S. patents, the oxide coating (formed on the innermost face of the tape on the supply reel) normally faces toward the interior of the transport apparatus due to its orientation. As a result of this placement, as the tape is threaded through the transport apparatus, the potential exists for the oxide coating to be drawn across various of the guiding structures associated with the apparatus. Since contact with such structures can compromise the useful life of the tape cartridge, and give rise to a potential for memory loss in the event that portions of the oxide coating become damaged, special care is taken to avoid contact between the oxide coating and those guiding structures which the oxide coating could potentially contact. For example, air-bearings are provided on either side of the read/write head to avoid contact between the bearings and the web of tape which passes across them.

The alternative embodiment transport apparatus 100 which is shown in Figures 8-14 operates to provide an enhanced tape path for the magnetic recording tape which is withdrawn from the tape cartridge 2 by operating upon a tape cartridge 2 which has been received within the transport apparatus 100 in an orientation which is rotated approximately 90 degrees from its normally intended orientation.

As produced by the manufacturer, it is the inwardly facing surface 16 of the web of tape 5 which is provided with the oxide coating which is used to record data. For reasons which will become apparent from the following description, the web of tape 5 is received within the transport apparatus 100 so that the surface 16 of the web of tape 5 faces generally outwardly as the web of tape 5 is withdrawn from the tape cartridge 2 and introduced into the transport apparatus 100. To this end, the tape cartridge 2 is received within the transport apparatus 100 along a side edge 13, rather than being received along its rear edge 14 in the usual manner. This essentially rotates the tape cartridge 2 through an angle of 90°, so that the leader block 10 is positioned along the left side of the transport apparatus 100, as viewed from its front, rather than its usual placement along the right side of the transport apparatus 100. Consequently, as the web of tape 5 is withdrawn from the tape cartridge 2, passing over a first idler roller 101, the surface 16 of the web of tape 5 is caused to face outwardly, as desired, and away from the surface of an idler roller 101. This also has the advantage of extending the tape path for the web of tape 5 being transported, enabling the development of an extended tape transport path despite the small size of the transport apparatus 100. Means for receiving the tape cartridge 2 in this orientation, and for readying the tape cartridge 2 and the leader block 10 for further use, are described with reference to our co-pending patent application Serial No. (EP/7020306) invented by Arnold Schonfeld and Robert Lane and entitled "Apparatus For Loading and Unloading a Tape Cartridge", the subject matter of which is incorporated by reference as if fully set forth herein.

Using such means, the tape cartridge 2 is effectively received within the transport apparatus 100 in the orientation desired, and is readied for further operation by operatively connecting the supply reel 6 to the supply motor 3, and by bringing the configured pin 15 into engagement with the slot 12 (and counterbore 12a) of the leader block 10 of the tape cartridge 2, as previously described in connection with the transport apparatus 1 of Figures 1-7.

A leader block loading/unloading mechanism 105 used in connection with the transport apparatus 100 is again generally comprised of three major components including a configured take-up reel 21, a contoured camming surface 109 , and an articulating engagement mechanism 110. The take-up reel 21 is essentially unchanged from that of the transport apparatus 1. However, the articulating engagement mechanism 110 is generally comprised of two interconnected arms 111, 112. The primary arm 111 terminates at the pin 15 which is used to engage the slot 12 of the leader block 10. The opposite end 113 of the primary arm 111 is connected to the secondary arm 112, at a pivot 114. Respective articulation of the arms 111, 112 is regulated by a spring 115 which is connected between an attachment point 116 fixed on the primary arm 111 and an attachment point 117 fixed on a flange 118 attached to and projecting from the secondary arm 112, toward the take-up reel 21.

For reasons previously discussed, the spring 115 is pivotally connected between the arms 111, 112 so that the spring is caused to proceed through an "over-centre" position wherein in certain orientations, compression of the spring 115 will cause the arm 111 to rotate in a clockwise direction with respect to the arm 112, while in other orientations, compression of the spring 115 will cause the arm 111 to rotate in a counter-clockwise direction with respect to the arm 112. Such rotation is responsive to the position of the pivot 114 with respect to the line of forces developed between the attachment points 111, 112.

The contoured camming surface 109 is again positioned above the flange 31 of the take-up reel 21 so that the take-up reel 21 and the articulating engagement mechanism 110 are capable of movement beneath the contoured camming surface 109, but so that the upper end 43 of the pin 15 is capable of following the face 44 of the contoured camming surface 109 to achieve loading and unloading of the leader block 10 as follows.

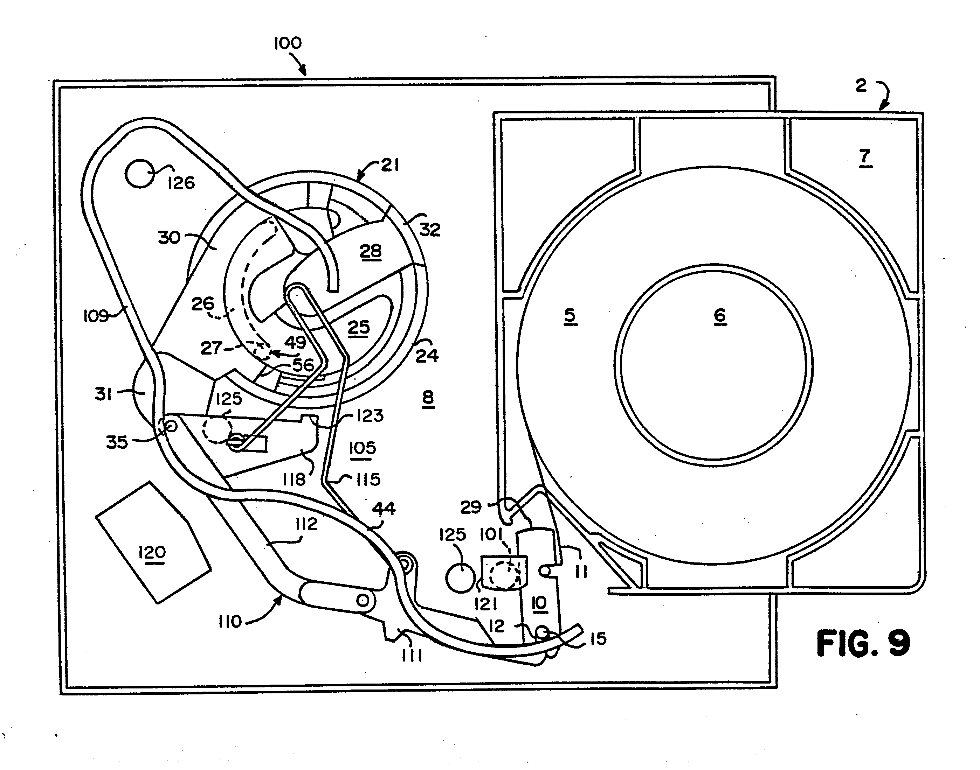

Figures 9-12 show sequential operation of the loading/unloading mechanism 105 to transfer the leader block 10 of the tape cartridge 2 from its seated position within the corner 9 of the housing 7, past a read/write head 120, and to the cavity 28 formed in the take-up reel 21, so that the web of tape 5 is ready for transport between the supply reel 6 and the take-up reel 21 under the influence of the motors 3, 19.

To accomplish this, the take-up reel 21 is caused to undergo a clockwise movement under the influence of the take-up motor 19. In the course of initiating such movement, the slot 26 of the hub 24 is caused to proceed through a defined angle until such time as the peg 27 engages the end 46 of the slot 26, directly coupling the motor 19 to the coupling 25, and snapping the leader block 10 from its nesting within the housing 7 as previously described. Engagement between the primary arm 111 and a pivot block 121, at an interface 122, has been found to be of particular importance in directing the forces applied to the leader block 10 so that the leader block 10 is reliably withdrawn from the housing 7 in the course of the foregoing operations.

Further retraction of the articulating engagement mechanism 110 responsive to continued clockwise rotation of the take-up reel 21 causes the pin 15 (with the leader block 10 attached) to progress to the left as shown in Figure 9, bringing the upper end 43 of the pin 15 into engagement with the face 44 of the contoured camming surface 109. At this point, the spring 115 serves to urge the pin 15 toward the face 44 of the contoured camming surface 109 as the pin 15 progresses along the defined contour.

Because of the distance from the take-up reel 21 to the corner 9 of the housing 7 whichcontains the leader block 10, and to maximize the length of the tape path developed within the transport apparatus 100, the articulating engagement mechanism 110 must initially be capable of significant extension. However, as the articulating engagement mechanism 110 is retracted along the face 44 of the camming surface 109, steps must be taken to reduce the extension of the articulating engagement mechanism 110 so as to enable its further clockwise rotation. To establish a proper distance between the take-up reel 21 and the pivot 114 which joins the arms 111, 112, the flange 118 terminates at a bearing surface 123 which is capable of cooperating with a stop 124 provided in the coupling 25 of the take-up reel 21, to limit inward rotation of the secondary arm 112, and therefore to maintain the end 113 of the primary arm 111 at an appropriate distance from the centre of the take-up reel 21.

Further clockwise rotation of the take-up reel 21 serves to guide the leader block 10 through the transport apparatus 100 for delivery to the take-up reel 21. As a result of this motion, the web of tape 5 is caused to progress around the idler roller 101, past a pair of bearings 125, and around yet another idler roller 126.

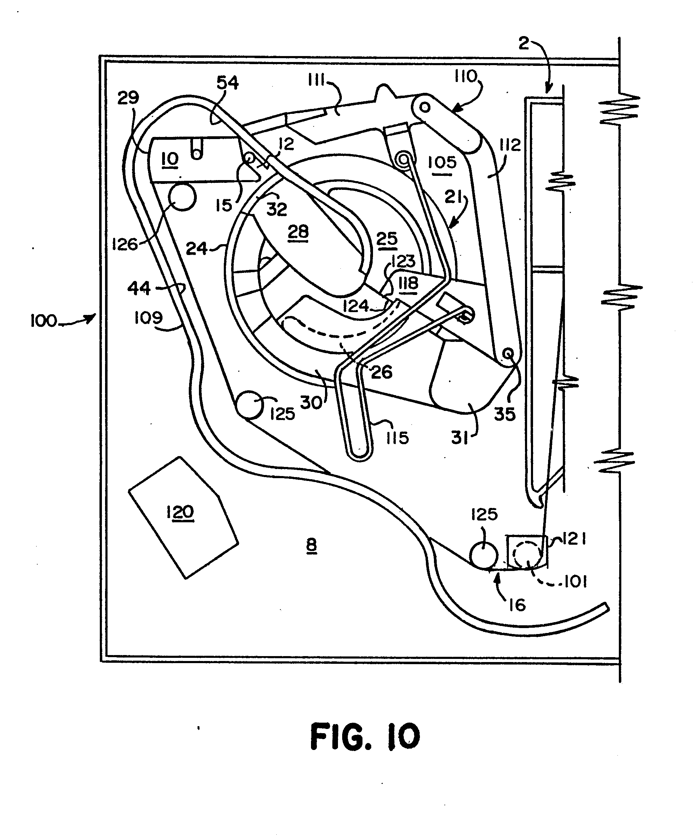

With reference to Figure 10, the leader block 10 is eventually drawn inwardly, along a segment 54 of the camming surface 109, toward the cavity 28 of the take-up reel 21. Further clockwise rotation of the take-up reel 21 causes the leader block 10 to enter the cavity 28.

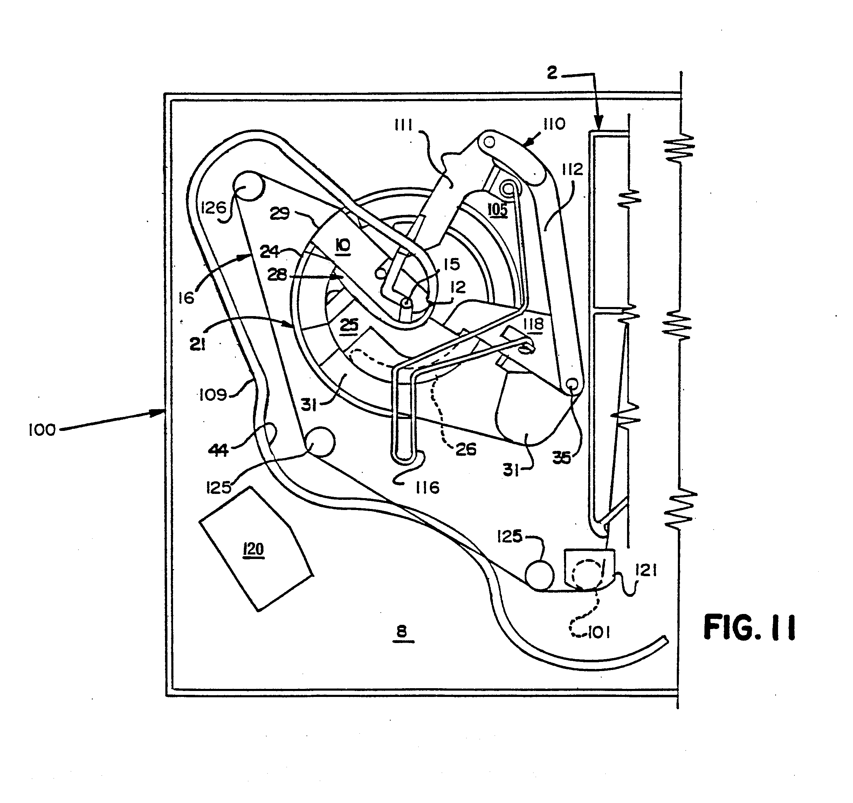

As the leader block 10 enters the cavity 28, the line of forces of the over-centre spring 115, as defined by its attachment points 116, 117, crosses the pivot 114. As a consequence of this, the spring 115 now serves to urge the leader block 10 inwardly toward the centre of the take-up reel 21, ensuring that the leader block 10 becomes fully and firmly seated within the cavity 28, as shown in Figure 11. As a result, the periphery of the hub 24 becomes completed by the surface 29 of the leader block 10, permitting the web of tape 5 to be wound around the take-up reel 21 for subsequent transport between the supply reel 6 and the take-up reel 21.

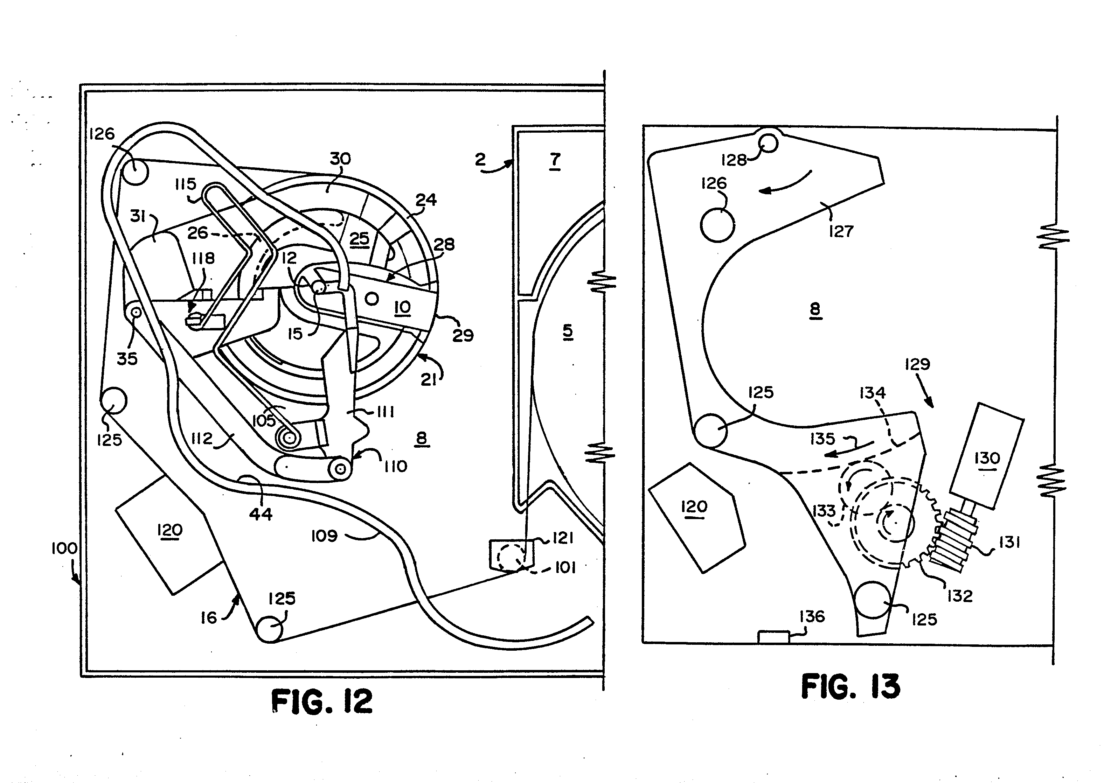

Of course, the web of tape 5 must be transported between the supply reel 6 and the take-up reel 21 in a manner which ensures that the surface 16 of the web of tape 5 is in proper contact with the read/write head 120. In delivering the leader block 10 to the take-up reel 21 as previously described, it is important to provide a significant space between the read/write head 120 and the plane of the bearings 125, to enable passage of the leader block 10. Accordingly, to develop proper contact with the read/write head 120 it becomes necessary to reorient the bearings 125, and the web of tape 5, into the operative position which is shown in Figure 12. To this end, the bearings 125 and the idler roller 126 are secured to a mounting plate 127 (shown only in Figure 13 for purposes of clarity) which is capable of being rotated about a pivot 128 in response to a drive mechanism 129. Rotation of the mounting plate 127 about the pivot 128 serves to urge the bearings 125 from the standby position shown in Figure 11 to an operative position which develops an appropriate tape wrap about the read/write head 120, in accordance with recognized practices.

The drive mechanism 129 generally comprises a motor 130 which is provided with a worm 131 positioned transverse to a worm gear 132. A gear cluster 133 is provided for speed reduction and direction reversal, and includes a gear segment 134 depending from the mounting plate 127. Consequently, suitable rotation of the motor 130 causes the mounting plate 127 to progress toward the read/write head 120, in the direction of the arrow 135, until contacting a stop 136 which is used to regulate proper seating of the mounting plate 127 to achieve the desired tape wrap about the read/write head 120. Further details regarding such structure may be had with reference to our co-pending patent application Serial No.    (EP/7020307) invented by Daniel Sachuk and entitled "Retractable Tape Guide", the subject matter of which is incorporated by reference as if fully set forth herein.

Having properly threaded the web of tape 5 through the transport apparatus 100, and having placed the oxide surface 16 of the web of tape 5 in appropriate contact with the read/write head 120, desired transfers of data may then take place in otherwise conventional manner. This proceeds until such time as the transfer of data has been completed and the tape cartridge 2 is to be unloaded from the transport apparatus 100. Again, this is in essence accomplished by reversing the above described steps.

However, before proceeding in this fashion as previously described, it is first necessary to retract the mounting plate 127, by reversing the direction of rotation of the motor 130, to withdraw the bearings 125 and the idler roller 126 to their standby position. This then enables the leader block 10 to pass between the bearings 125 and the read/write head 120, under the influence of the supply motor 3. In the course of this process, it has been found that the idler roller 126 tends to inhibit free retraction of the leader block 10 despite operation of the movable mounting plate 127. To overcome this, the take-up motor 19 (which is preferably microprocessor controlled) is jogged in a clockwise direction to avoid such undesirable contact as the leader block 10 is retracted past the idler roller 126.

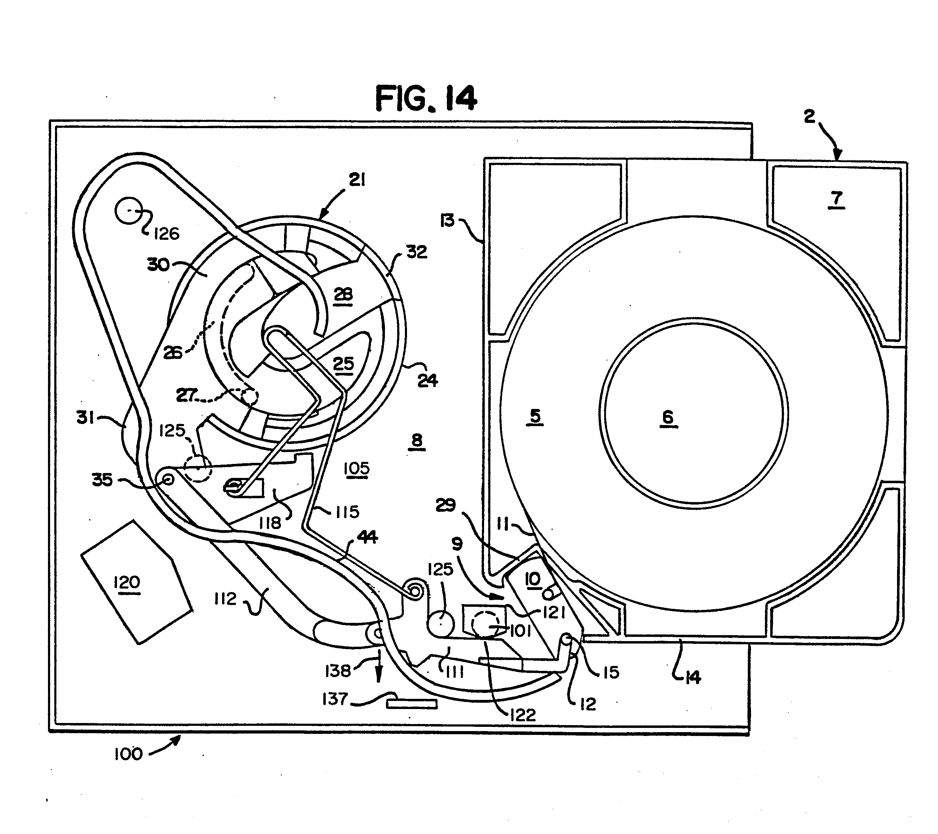

Further clockwise rotation of the supply motor 3 causes the pin 15, and the leader block 10, to progress along the face 44 of the camming surface 109, until such time as the web of tape 5 and the end 29 of the leader block 10 are returned to the housing 7 of the tape cartridge 2, and the end of the leader block 10 which is engaged by the pin 15 is in a position just outside of its nesting in the corner 9 of the tape cartridge 2, with reference to Figure 14. The energy required to fully snap the leader block 10 into the housing 7 is again primarily supplied by the hub 24 and coupling 25 which connect the take-up reel 21 to the drive motor 19. A reaction wall 137 is provided to limit movement of the articulating engagement mechanism 110 (in the direction of arrow 138), and to thereby transmit the forces developed under the influence of the take-up motor 19 in an appropriate direction to snap the leader block 10 back into the housing 7.

The foregoing therefore operates in a manner which maintains the surface 16 of the web of tape 5 which is provided with the oxide coating away from potentially contacting structures, other than the read/write head 120. Moreover, this is accomplished while maintaining a significant tape path between the supply and take-up reels 6, 21 and the bearings 125. All of these benefits are achieved within the confines of a transport apparatus 100 which is capable of fitting within the standard 5 1/4 inch (13.34 cms) form factor or footprint which is preferred in connection with mini/micro-computer equipment.

It will therefore be understood that various changes in the details, materials and arrangement of parts which have been herein described and illustrated in order to explain the nature of this invention may be made by those skilled in the art within the principle and scope of the invention as expressed in the following claims.

## Claims

1. A transport apparatus for receiving and operating upon a tape cartridge (2) including a web of tape (5) disposed on a supply reel (6) and having a free end (11) engaged by a leader block (10), the said transport apparatus comprising a take-up reel (21) for receiving said leader block (10) and a leader block loading means (20) for loading the leader block (10) in the said take-up reel (21) characterised in that the leader block loading means (20) comprises a linkage (36) for engaging a slot (12) of said leader block (10) and for delivering said engaged leader block (10) to the take-up reel (21), the said leader block loading means (20) being operatively associated with said take-up reel (21).

2. An apparatus as claimed in claim 1 wherein said leader block loading means (20) is directly associated with said take-up reel (21).

3. An apparatus as claimed in claim 1 or 2 wherein said leader block loading means (20) comprises a flange member (31) associated with said take-up reel (21) and having a pivot (35) spaced from the axis of said take-up reel (21) for receiving a first end of said linkage (36); and a camming means (22) disposed over said take-up reel (21) and including a face (44) for receiving a second end of said linkage (36).

4. An apparatus as claimed in claim 3 wherein the second end of the said linkage (36) is provided with means (15) for engaging the slot (12) of said leader block (10).

5. An apparatus as claimed in claim 3 or 4 wherein said camming means (22) lies in a plane which is generally parallel to the plane of said flange member (31).

6. An apparatus as claimed in any of claims 3-5 wherein said linkage is a single arm (36) extending from the pivot (35) of said flange member (31).

7. An apparatus as claimed in any of claims 3-6 wherein a spring (40) is connected between said linkage (36) and said flange member (31).

8. An apparatus as claimed in claim 7 wherein said spring (40) is an over-centre spring such that in a first configuration, said linkage (36) is caused to rotate about said pivot (35) in a clockwise direction, and in a second configuration, said linkage (36) is caused to rotate about said pivot (35) in a counter-clockwise direction.

9. An apparatus as claimed in claim 3 wherein said linkage is an articulating assembly (110) of arms (111,112) joined at a pivoted connection (114).

10. An apparatus as claimed in claim 9 wherein a spring (115) is connected between the arms (111,112) of said articulating assembly (110).

11. An apparatus as claimed in claim 10 wherein said spring (115) is an over-centre spring such that in a first configuration, one (111) of said arms (111,112) is caused to rotate in a clockwise direction with respect to the other (112) of said arms (111,112), and in a second configuration, said one arm (111) is caused to rotate in a counter-clockwise direction with respect to said other arm (112).

12. An apparatus as claimed in claim 7 or 10 wherein said connection is a pivoted connection.

13. An apparatus as claimed in claim 8 or 11 wherein said first and second configurations are separated by a configuration wherein said pivoted connection is in general alignment with the operative connections of said spring (40,115).

14. An apparatus as claimed in claim 8 or 11 wherein said over-centre spring (40,115) develops a force to load the second end (15) of said linkage (36,110) against the face of said camming means (22,109).

15. An apparatus as claimed in claim 8 or 11 wherein said over-centre spring (40,115) develops a force against the second end (15) of said linkage (36,110) to load the leader block (10) into said take-up reel (21).

16. An apparatus as claimed in claim 9 or in any claim appendent thereto, wherein an arm (112) of said articulating assembly (110) which is operatively associated with the pivot (35) of said take-up reel (21) includes a stop member (123) projecting from said arm (112) toward said take-up reel (21).

17. An apparatus as claimed in claim 16 wherein said stop member (123) comprises a flange (118) for engaging a stop (124) formed in said take-up reel (21), to limit rotation of said linkage (110) about said pivot (35).

18. An apparatus as claimed in claim 9 or in any claim appendant thereto, wherein a reaction point (137) is provided for directing the forces applied to said leader block (10) when said leader block (10) is to be withdrawn from or replaced in said tape cartridge.

19. An apparatus as claimed in any preceding claim wherein said transport apparatus is adapted to receive said tape cartridge (2) so that said leader block (10) is remote from said take-up reel (21).

20. An apparatus as claimed in claim 19 wherein said transport apparatus is adapted to receive said tape cartridge (2) so that the rear edge of said cartridge (2) extends laterally along a side edge (13) of said transport apparatus.

FIG. I

0238260

**FIG. 2**

7, 2, 3, 5, 12a, 43, 15, 12, 10, 9, 8, 47, 50, 36, 23, 21, 22, 44, 31, 45, 48, 30, 20, 25, 27, 19, 24a, 27, 1

# FIG. 3

1

22

44

48

48

45

50

47

20

36

12

35

23

15

10

29

41

21

40

24

8

27

26

46

32

49

25

28

42

46

27

26

31

7

2

# FIG. 4

22

44

50

48

45

48

47

21

42

29

23

40

27

26

25

10

12

28

26

15

27

20

24

8

41

35

36

31

7

2

0238260

FIG. 5

FIG. 6

# FIG. 7

0238260

FIG. 8

100

2

126

21

30

32

28

109

26

25

27 49

24

56

31

8

35

125

123

105

118 115

44

120

112

29

125 101

11

110

121 10

12 15

111

FIG. 9

5

6

7

0238260

FIG. 10

FIG. 11

0238260

0238260

FIG. 13

FIG. 12

# FIG. 14